# EUROPEAN PATENT APPLICATION

(11) **EP 3 748 733 A1**
(43) Date of publication of application: **09.12.2020**
(21) Application number: 18903283.2
(22) Date of filing: 31.01.2018
(51) Int. Cl.: H01M 2/28, H01M 2/02, H01M 2/34

(54) **SHORT-CIRCUIT PREVENTION MEMBER, POWER STORAGE BATTERY, POWER STORAGE DEVICE, AND POWER STORAGE SYSTEM**

(71) Applicant: Hitachi Chemical Company, Ltd., Chiyoda-ku, Tokyo 100-6606 (JP)
(72) Inventor: AONE Shigeo, Tokyo 100-6606 (JP); TSUJII Nobunaga, Tokyo 100-6606 (JP); KIMURA Tetsuya, Tokyo 100-6606 (JP)
(74) Representative: Hoffmann Eitle
(86) International application number: PCT/JP2018/003166
(87) International publication number: WO 2019/150477

(57) **Abstract**

A short-circuit prevention member has electrical insulation and is attachable to and detachable from at least one of the positive electrode connecting member and the negative electrode connecting member, and in a state in which the short-circuit prevention member is mounted on the positive electrode connecting member and/or the negative electrode connecting member, the short-circuit prevention member covers at least one end portion of the positive electrode connecting member and/or the negative electrode connecting member in an extending direction and the tab of the positive electrode and/or the tab of the negative electrode located closest to the end portion.

## Description

### Technical Field

The present invention relates to a short-circuit prevention member, a power storage battery, a power storage device, and a power storage system.

### Background Art

A power storage battery includes an electrode group and a case which accommodates the electrode group. The electrode group has a positive electrode, a negative electrode, and a separator. In the positive electrode, a positive electrode current collector holds a positive electrode active material. In the negative electrode, a negative electrode current collector holds a negative electrode active material. In a power storage battery, a plurality of positive electrode tabs are electrically connected at a positive electrode connecting portion (a strap), and a plurality of negative electrode tabs are electrically connected at a negative electrode connecting portion (for example, refer to Patent Literature 1). The positive electrode connecting portion and the negative electrode connecting portion extend in an arrangement direction of the positive electrode, the negative electrode, and the separator.

### Citation List

### Patent Literature

[Patent Literature 1] Japanese Unexamined Patent Publication No. H5-13066

### Summary of Invention

### Technical Problem

The power storage battery may be disposed and used so that the arrangement direction of the positive electrode, the negative electrode, and the separator is disposed in a vertical direction, that is, an extending direction of the positive electrode connecting portion and the negative electrode connecting portion is the vertical direction. In the power storage battery, when charging and discharging are repeated, a binding force between particles of the positive electrode active material becomes weak, and the active material may come off from the positive electrode. The active material which has come off floats in an electrolytic solution and accumulates on a lower portion of the case of the power storage battery. Thus, the active material accumulated on the lower portion of the case of the power storage battery may be present over the electrode (for example, the negative electrode) disposed at the lowest portion of the case and the tab of the electrode (for example, the positive electrode) adjacent to the electrode with the separator therebetween. In this case, the positive electrode and the negative electrode may be electrically connected by the active material and may be short-circuited.

An object of one aspect of the present invention is to provide a short-circuit prevention member, a power storage battery, a power storage device, and a power storage system which are able to prevent a short circuit between a positive electrode and a negative electrode.

### Solution to Problem

A short-circuit prevention member according to one aspect of the present invention is a short-circuit prevention member used in a power storage battery including an electrode group having a plurality of positive electrodes, a plurality of negative electrodes and a plurality of separators, a positive electrode connecting member having a case configured to accommodate the electrode group, electrically connected to tabs of the plurality of positive electrodes, electrically connected to a positive electrode terminal, and configured to extend in an arrangement direction of the plurality of positive electrodes, and a negative electrode connecting member electrically connected to tabs of the plurality of negative electrodes, electrically connected to a negative electrode terminal, and configured to extend in an arrangement direction of the plurality of negative electrodes, wherein the short-circuit prevention member has electrical insulation and is attachable to and detachable from at least one of the positive electrode connecting member and the negative electrode connecting member, and in a state in which the short-circuit prevention member is mounted on the positive electrode connecting member and/or the negative electrode connecting member, the short-circuit prevention member covers at least one end portion of the positive electrode connecting member and/or the negative electrode connecting member in an extending direction and the tab of the positive electrode and/or the tab of the negative electrode located closest to the end portion.

In the short-circuit prevention member according to the aspect of the present invention, in the state in which the short-circuit prevention member is mounted on the positive electrode connecting member and/or the negative electrode connecting member, the short-circuit prevention member covers at least one end portion of the positive electrode connecting member and/or the negative electrode connecting member in an extending direction and the tab of the positive electrode and/or the tab of the negative electrode located closest to the end portion. Thus, in the case in which the power storage battery is disposed and used so that the extending direction of the positive electrode connecting member and the negative electrode connecting member is the vertical direction, even when an active material accumulates on a lower portion of the case, since the end portion and the tab are covered with the short-circuit prevention member having electrical insulation, the electrode (one of the positive electrode and the negative electrode) disposed at the lowest portion of the case and the tab of the electrode (the other one of the positive electrode and the negative electrode) adjacent to the electrode with the separator therebetween can be prevented from being electrically connected by the active material. Therefore, the short-circuit prevention member can prevent a short circuit between the positive electrode and the negative electrode.

In one embodiment, the short-circuit prevention member may include a first member configured to face an end surface of the end portion and one main surface of the tab, and a second member configured to face a side surface of the end portion adjacent to at least the end surface and a side surface of the tab in the extending direction of the positive electrode connecting member and/or the negative electrode connecting member. With such a configuration, it is possible to prevent the end portions of the positive electrode connecting member and/or the negative electrode connecting member and the active material accumulated on the tab of the positive electrode and/or the tab of the negative electrode from coming into contact with each other.

In one embodiment, the first member may include an overlapping portion which overlaps a peripheral edge portion of the separator on the end portion side and is in contact with the peripheral edge portion when seen in the extending direction of the positive electrode connecting member and/or the negative electrode connecting member. With such a configuration, since it is possible to cover a part of the peripheral edge portion of the separator, it is possible to prevent the active material from entering the positive electrode or the negative electrode from the peripheral edge portion of the separator. Therefore, a short circuit between the positive electrode and the negative electrode can be further prevented.

In one embodiment, the negative electrode may be disposed at an end portion of the electrode group of the power storage battery in the arrangement direction, and the short-circuit prevention member may be mounted to cover the end portion of the positive electrode connecting member and the tab of the positive electrode. With such a configuration, it is possible to prevent a short circuit between the tabs of the negative electrode and the positive electrode due to the accumulated active material.

In one embodiment, the case of the power storage battery may be translucent, and the short-circuit prevention member may be colored to be visible from outside of the case. With such a configuration, it is possible to check whether or not the short-circuit prevention member is mounted from outside of the case without performing work of opening a lid of the case. Therefore, whether or not the short-circuit prevention member is mounted can be easily checked. Thus, workability of the checking can be improved.

In a power storage battery according to one aspect of the present invention, the above-described short-circuit prevention member is mounted.

In the power storage battery according to the aspect of the present invention, since the short-circuit prevention member is mounted, in the case in which the power storage battery is disposed and used so that the extending direction of the positive electrode connecting member and the negative electrode connecting member is a vertical direction, even when the active material has accumulated on the lower part of the case, the electrode (one of the positive electrode and the negative electrode) disposed at the lowest portion of the case and the tab of the electrode (the other one of the positive electrode and the negative electrode) adjacent to the electrode with the separator therebetween can be prevented from being electrically connected to each other by the active material. Therefore, in the power storage battery, a short circuit between the positive electrode and the negative electrode can be prevented.

A power storage device according to one aspect of the present invention includes the above-described power storage battery, and a housing configured to accommodate a plurality of power storage batteries, wherein each of the plurality of power storage batteries is disposed in the housing so that the extending direction of the positive electrode connecting portion and the negative electrode connecting portion is a vertical direction.

In the power storage device according to the aspect of the present invention, in the power storage battery, even when the active material has accumulated on the lower portion of the case, since the short-circuit prevention member is mounted, the electrode (one of the positive electrode and the negative electrode) disposed at the lowest portion of the case and the tab of the electrode (the other one of the positive electrode and the negative electrode) adjacent to the electrode with the separator therebetween can be prevented from being electrically connected to each other by the active material. Therefore, in the power storage battery of the power storage device, a short circuit between the positive electrode and the negative electrode can be prevented.

A power storage system according to one aspect of the present invention includes the above-described power storage device, a power generation device using renewable energy, and a supply part configured to supply electric power generated by the power generation device.

In the power storage system according to the aspect of the present invention, since the short-circuit prevention member is mounted in the power storage battery of the power storage device, a short circuit between the positive electrode and the negative electrode can be prevented. Thus, in the power storage system, it is possible to curb malfunction of the system due to a short circuit in the power storage battery. Accordingly, in the power storage system, it is possible to stabilize fluctuation of power output from a power generation device by the power supply from the power storage device, and it is possible to stably charge the power storage device with surplus power from the power generation device and to stably supply the power from the power storage device when necessary.

### Advantageous Effects of Invention

According to one aspect of the present invention, it is possible to prevent a short circuit between a positive electrode and a negative electrode.

### Brief Description of Drawings

FIG 1 is a diagram schematically showing a configuration of a power storage system.
FIG 2 is a diagram showing a power storage device.
FIG 3 is a perspective view showing a power storage battery with a part thereof cut away.
FIG 4 is a perspective view showing an electrode group.
FIG 5 is a perspective view showing a short-circuit prevention member.
FIG 6 is a front view of the short-circuit prevention member.
FIG 7 is a perspective view showing a state in which the short-circuit prevention member is mounted in a positive electrode connecting member.
FIG 8 is a diagram showing a state in which an active material accumulates on a lower portion of a case.
FIG 9(a) is a diagram showing a partial cross-sectional structure of an electrode group in which the short-circuit prevention member is mounted, and FIG 9(b) is a diagram showing a partial cross-sectional structure of an electrode group in which the short-circuit prevention member is not mounted.

### Description of Embodiments

Hereinafter, a preferred embodiment of the present invention will be described in detail with reference to the accompanying drawings. In the description of the drawings, the same or corresponding elements will be designated by the same reference numbers, and the duplicate description thereof will be omitted.

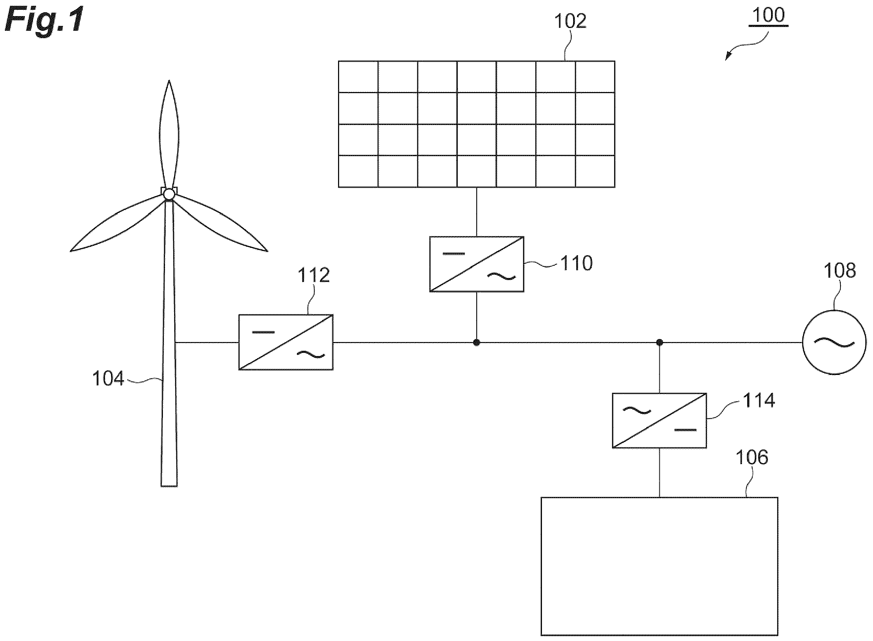

As shown in FIG 1, a power storage system 100 includes a solar cell 102, a wind power generation device 104, a power storage device 106, and a commercial power supply (supply part) 108. The solar cell 102 and the wind power generation device 104 are power generation devices using renewable energy. In the power storage system 100, for example, when power output from the solar cell 102 and/or the wind power generation device 104 varies, the commercial power supply 108 is stabilized by supplying the power from the power storage device 106.

DC power generated by the solar cell 102 is output to a power conditioner 110. The power conditioner 110 converts DC power into AC power and outputs the AC power to the commercial power supply 108. DC power generated by the wind power generation device 104 is output to a power conditioner 112. The power conditioner 112 converts DC power into AC power and outputs the AC power to the commercial power supply 108.

The power storage device 106 outputs DC power to a power conditioner 114 according to control of a control device (not shown). Specifically, the power storage device 106 outputs the DC power when the power output from the solar cell 102 and/or the wind power generation device 104 varies. The power conditioner 114 converts DC power into AC power and outputs the AC power to the commercial power supply 108. The power storage device 106 is uniformly charged according to the control of the control device.

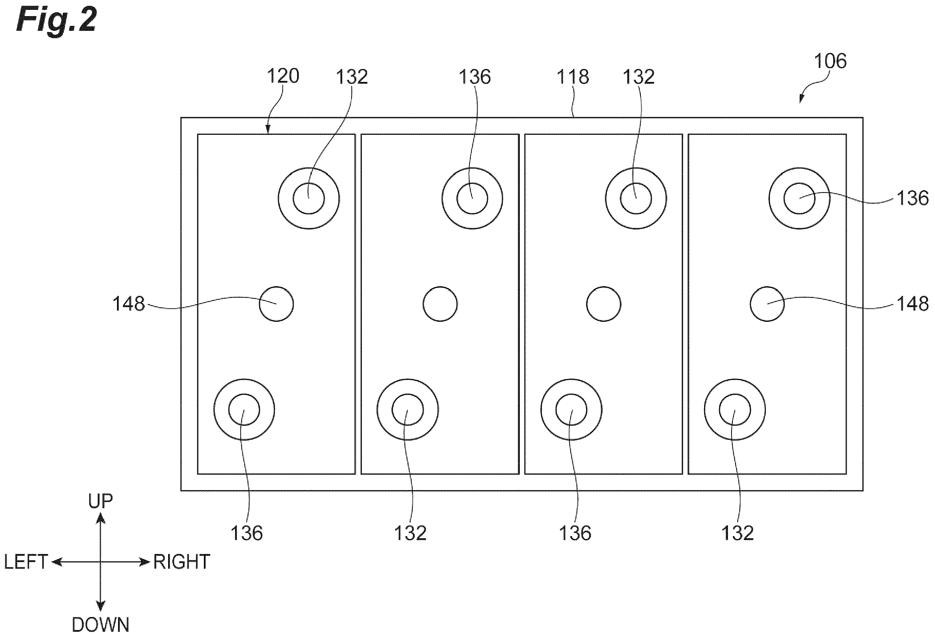

As shown in FIG 2, the power storage device 106 includes a housing 118 and a plurality of power storage batteries 120. In the power storage device 106, the plurality of (here, four) power storage batteries 120 are electrically connected in series, for example, by a connecting member (a bus bar) which is not shown. The housing 118 accommodates the plurality of power storage batteries 120.

The plurality of power storage batteries 120 are arranged side by side in the left-right direction in the housing 118. In the power storage device 106, the power storage battery 120 is disposed in the housing 118 so that a positive electrode terminal 132 and a negative electrode terminal 136 are located in the vertical direction. Specifically, in one power storage battery 120, the positive electrode terminal 132 is located on the upper side, and the negative electrode terminal 136 is located on the lower side. In another power storage battery 120 adjacent to the one power storage battery 120, the negative electrode terminal 136 is located on the upper side, and the positive electrode terminal 132 is located on the lower side.

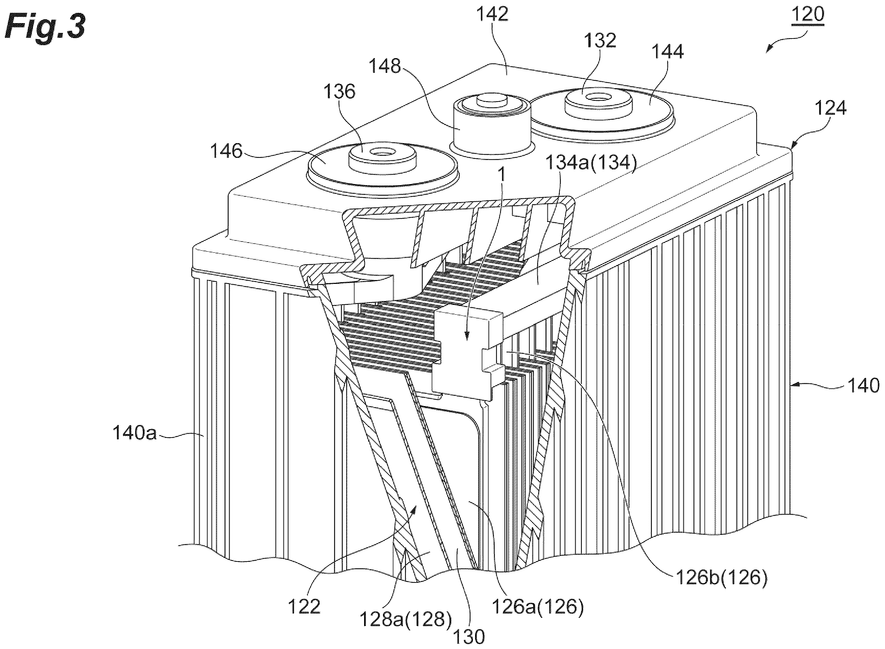

As shown in FIG. 3, each of the power storage batteries 120 is, for example, a valve regulated lead power storage battery. Each of the power storage batteries 120 includes an electrode group 122 and a case 124 which accommodates the electrode group 122.

The electrode group 122 includes a plurality of positive electrodes 126, a plurality of negative electrodes 128, and a plurality of separators 130. In the electrode group 122, the separator 130 is interposed between the positive electrode 126 and the negative electrode 128, and the positive electrode 126 and the negative electrode 128 are disposed alternately. In the embodiment, in the electrode group 122, the negative electrode 128 is disposed at an end portion in an arrangement direction of the positive electrode 126, the negative electrode 128, and the separator 130 (hereinafter, also simply referred to as "arrangement direction"). That is, in the electrode group 122, the negative electrode 128 is disposed to face a side surface portion 140a (described later) of the case 124.

The positive electrode 126 has a positive electrode current collector 126a. The positive electrode current collector 126a has a positive electrode current collector tab 126b. A positive electrode material (not shown) is provided on the positive electrode current collector 126a. The positive electrode material may include a positive electrode active material and an additive. The positive electrode active material is, for example, lead powder or the like. Examples of the additive include a carbon material, reinforcing short fibers, and the like.

The negative electrode 128 has a negative electrode current collector 128a. The negative electrode current collector 128a has a negative electrode current collector tab 128b. A negative electrode material (not shown) is provided on the negative electrode current collector 128a. The negative electrode material may include a negative electrode active material and an additive. The negative electrode active material is, for example, spongy lead. Examples of the additive include barium sulfate, a carbon material, reinforcing short fibers, and the like.

The separator 130 is not particularly limited as long as it electronically insulates between the positive electrode 126 and the negative electrode 128, allows ions to pass therethrough and has resistance to an oxidizing property on the positive electrode 126 side and a reducing property on the negative electrode 128 side. Examples of a material (quality of a material) of the separator 130 include resins, inorganic materials, and the like. In the embodiment, a peripheral edge portion 130a of the separator 130 protrudes further than the positive electrode current collector 126a of the positive electrode 126 and the negative electrode current collector 128a of the negative electrode 128 when seen in the arrangement direction.

Each of the positive electrodes 126 is electrically connected to the positive electrode terminal 132. Each of the positive electrodes 126 and positive electrode terminals 132 is electrically connected by a positive electrode strap 134. The positive electrode strap 134 has a positive electrode connecting member 134a and a terminal connecting member 134b.

The positive electrode connecting member 134a is connected to each of the positive electrode current collector tab 126b of the plurality of positive electrodes 126. The positive electrode current collector tab 126b has a pair of main surfaces (one main surface and the other main surface) which face each other in an extending direction of the positive electrode connecting member 134a, and a pair of side surfaces which connect the pair of main surfaces. The positive electrode connecting member 134a is a prismatic member having a substantially rectangular cross section. That is, the positive electrode connecting member 134a has a pair of end surfaces which have a substantially rectangular shape and face each other, and four side surfaces which have a substantially rectangular shape and extend to connect the pair of end surfaces. The positive electrode connecting member 134a extends in the arrangement direction.

The terminal connecting member 134b supports the positive electrode terminal 132. The terminal connecting member 134b is electrically connected to the positive electrode connecting member 134a. The positive electrode terminal 132 is provided upright on the terminal connecting member 134b. The terminal connecting member 134b is disposed on one end portion side of the positive electrode connecting member 134a in the extending direction and is integrally formed with the positive electrode connecting member 134a. The terminal connecting member 134b has, for example, a substantially triangular shape.

Each of the negative electrodes 128 is electrically connected to the negative electrode terminal 136. Each of the negative electrodes 128 and negative electrode terminals 136 are electrically connected by a negative electrode strap 138. The negative electrode strap 138 has a negative electrode connecting member 138a and a terminal connecting member 138b.

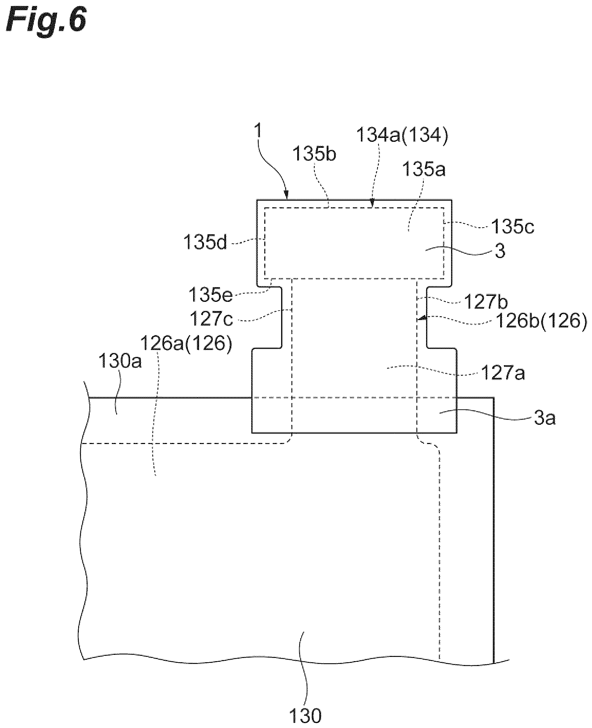

The negative electrode connecting member 138a is connected to each of the negative electrode current collector tab 128b of the plurality of negative electrodes 128. The negative electrode current collector tab 128b has a pair of main surfaces (one main surface and the other main surface) 127a (refer to FIG 6) which face each other in an extending direction of the negative electrode connecting member 138a, and a pair of side surfaces 127b and 127c (refer to FIG. 6) which connect the pair of main surfaces. The negative electrode connecting member 138a is a prismatic member having a substantially rectangular cross section. That is, the negative electrode connecting member 138a has a pair of end surfaces 135a (refer to FIG 6) which have a substantially rectangular shape and face each other, and four side surfaces 135b, 135c, 135d and 135e (refer to FIG 6) which have a substantially rectangular shape and extend to connect the pair of end surfaces. The negative electrode connecting member 138a extends in the arrangement direction.

The terminal connecting member 138b supports the negative electrode terminal 136. The terminal connecting member 138b is electrically connected to the negative electrode connecting member 138a. The negative electrode terminal 136 is provided upright on the terminal connecting member 138b. The terminal connecting member 138b is disposed on the other end portion side of the negative electrode connecting member 138a in the extending direction and is integrally formed with the negative electrode connecting member 138a. The terminal connecting member 138b has, for example, a substantially triangular shape.

The case 124 has a main body 140 and a lid 142. The main body 140 is a box-shaped battery case. The main body 140 is made of a material such as polypropylene. In the embodiment, the main body 140 is milky white translucent (milky white). The main body 140 includes four side surface portions 140a and a bottom portion (not shown).

The lid 142 covers an opening portion of the main body 140. A first terminal portion 144 on which the positive electrode terminal 132 is disposed, a second terminal portion 146 on which the negative electrode terminal 136 is disposed, and a control valve 148 are provided at the lid 142.

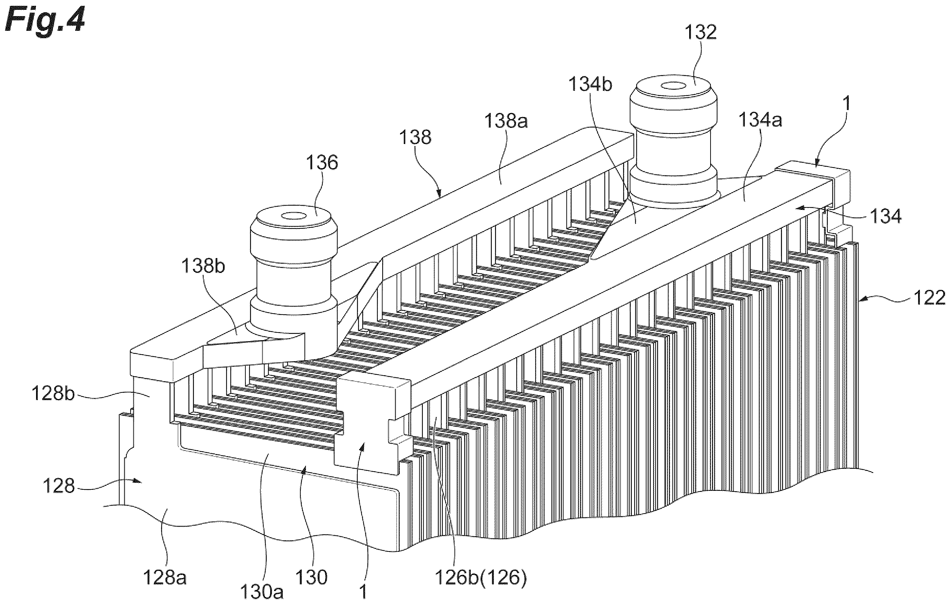

As shown in FIGS. 3 and 4, a short-circuit prevention member 1 is mounted in the power storage battery 120 having the above-described configuration. In the embodiment, the short-circuit prevention member 1 is disposed on the positive electrode connecting member 134a of the positive electrode strap 134. Specifically, the short-circuit prevention member 1 covers at least an end portion of the positive electrode connecting member 134a in the extending direction and the positive electrode current collector tab 126b of the positive electrode 126 located closest to the end portion in a state in which it is mounted on the positive electrode connecting member 134a. In the embodiment, the short-circuit prevention member 1 is disposed at both end portions of the positive electrode connecting member 134a in the extending direction. Hereinafter, the short-circuit prevention member 1 will be described in detail.

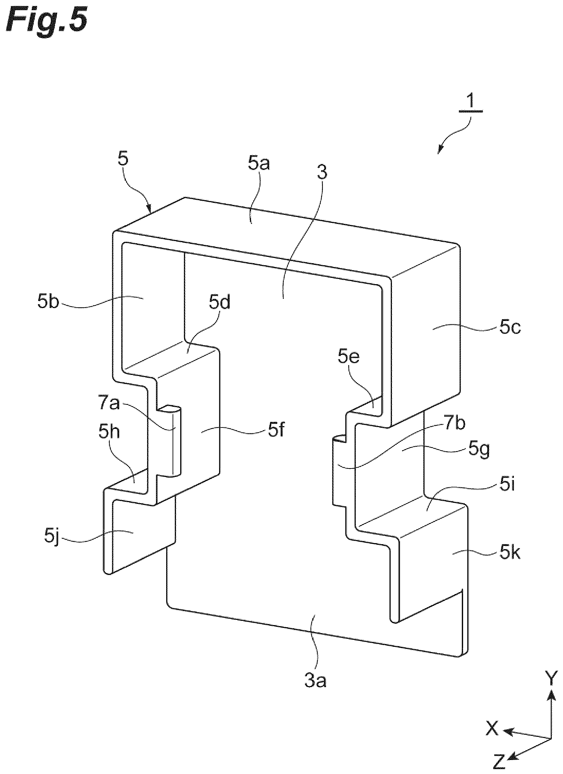

As shown in FIG. 5, the short-circuit prevention member 1 is made of, for example, an electrically insulating resin such as polypropylene. The short-circuit prevention member 1 is formed by, for example, injection molding. The short-circuit prevention member 1 is colored to be visible from the outside of the case 124 of the power storage battery 120. The short-circuit prevention member 1 is colored with red, for example. The short-circuit prevention member 1 is attachable to and detachable from the positive electrode connecting member 134a.

The short-circuit prevention member 1 has a main body portion (a first member) 3 and a side surface portion (a second member) 5. The main body portion 3 and the side surface portion 5 have, for example, the same thickness. The thicknesses of the main body portion 3 and the side surface portion 5 may be set appropriately. From the viewpoint of detachability of the short-circuit prevention member 1, the thicknesses of the main body portion 3 and the side surface portion 5 are preferably set to have flexibility. In the description of the short-circuit prevention member 1, an X direction, a Y direction, and a Z direction shown in FIG. 5 are used for convenience of description.

In a state in which the short-circuit prevention member 1 is mounted on the positive electrode connecting member 134a, the main body portion 3 faces an end surface 135a (refer to FIG 6) of the end portion of the positive electrode connecting member 134a in the one extending direction and the one main surface 127a (refer to FIG 6) of the positive electrode current collector tab 126b of the positive electrode 126 (covers the end surface and the front surface) when seen in the extending direction (the Z direction) of the positive electrode connecting member 134a. The main body portion 3 has a plate shape. In the embodiment, the main body portion 3 has a substantially H shape when seen from the front. That is, in the main body portion 3, a pair of recessed portions are provided at positions facing each other in the X direction.

As shown in FIG. 6, the main body portion 3 has an overlapping portion 3a which overlaps a part of the peripheral edge portion 130a of the separator 130 when seen in the extending direction of the positive electrode connecting member 134a. As shown in FIG. 4, the main body portion 3 is not in contact with the negative electrode 128.

The side surface portion 5 faces the side surfaces 135b to 135e (refer to FIG 6) adjacent to at least the end surface 135a of the end portion of the positive electrode connecting member 134a (forming corner portions of the end portion together with the end surface 135a) and side surfaces 125b and 127c (refer to FIG 6) of the positive electrode current collector tab 126b. The side surface portion 5 includes a first side surface portion 5a, a second side surface portion 5b, a third side surface portion 5c, a fourth side surface portion 5d, a fifth side surface portion 5e, a sixth side surface portion 5f, a seventh side surface portion 5g, an eighth side surface portion 5h, a ninth side surface portion 5i, a tenth side surface portion 5j, and an eleventh side surface portion 5k.

The first side surface portion 5a, the second side surface portion 5b, the third side surface portion 5c, the fourth side surface portion 5d and the fifth side surface portion 5e cover parts of the side surfaces 135b to 135e (refer to FIG 6) adjacent to the end surface 135a of the end portion of the positive electrode connecting member 134a in the extending direction. The first side surface portion 5a is disposed at an upper end portion of the main body portion 3 in the Y direction. The first side surface portion 5a extends from the main body portion 3 in the Z direction (a direction orthogonal to a surface of the main body portion 3). Further, the first side surface portion 5a extends in the X direction. The second side surface portion 5b and the third side surface portion 5c are disposed to face each other in the X direction. Each of the second side surface portion 5b and the third side surface portion 5c is connected to an end portion of the first side surface portion 5a in the X direction. The second side surface portion 5b and the third side surface portion 5c extend from the main body portion 3 in the Z direction. In addition, the second side surface portion 5b and the third side surface portion 5c extend in the Y direction. A length of each of the second side surface portion 5b and the third side surface portion 5c in the Y direction is equal to or greater than a thickness of the positive electrode connecting member 134a.

The fourth side surface portion 5d is connected to a lower end portion of the second side surface portion 5b in the Y direction. The fourth side surface portion 5d extends from the main body portion 3 in the Z direction. Further, the fourth side surface portion 5d extends in the X direction to face the first side surface portion 5a in the Y direction (to enter inward further than the second side surface portion 5b). The fifth side surface portion 5e is connected to a lower end portion of the third side surface portion 5c in the Y direction. The fifth side surface portion 5e extends from the main body portion 3 in the Z direction. In addition, the fifth side surface portion 5e extends in the X direction to face the first side surface portion 5a in the Y direction (to enter inward further than the third side surface portion 5c). The fourth side surface portion 5d and the fifth side surface portion 5e are disposed at the same height positions in the Y direction.

The sixth side surface portion 5f and the seventh side surface portion 5g cover a side surface of the positive electrode current collector tab 126b of the positive electrode 126. The sixth side surface portion 5f and the seventh side surface portion 5g are disposed to face each other in the X direction. The sixth side surface portion 5f is connected to the fourth side surface portion 5d. The sixth side surface portion 5f extends from the main body portion 3 in the Z direction. In addition, the sixth side surface portion 5f extends in the Y direction. A first claw portion 7a is provided at an end portion of the sixth side surface portion 5f in the Z direction (an end portion thereof opposite to the main body portion 3). The first claw portion 7a protrudes inward further than the inner surface of the sixth side surface portion 5f in the X direction.

The seventh side surface portion 5g is connected to the fifth side surface portion 5e. The seventh side surface portion 5g extends from the main body portion 3 in the Z direction. Further, the seventh side surface portion 5g extends in the Y direction. A second claw portion 7b is provided at an end portion of the seventh side surface portion 5g in the Z direction (an end portion thereof on the side opposite to the main body portion 3). The second claw portion 7b protrudes inward further than an inner surface of the seventh side surface portion 5g in the X direction.

The eighth side surface portion 5h is connected to a lower end portion of the sixth side surface portion 5f in the Y direction. The eighth side surface portion 5h extends from the main body portion 3 in the Z direction. Further, the eighth side surface portion 5h extends in the X direction to face the fourth side surface portion 5d in the Y direction (to be projected outward further than the sixth side surface portion 5f). The ninth side surface portion 5i is connected to a lower end portion of the seventh side surface portion 5g in the Y direction. The ninth side surface portion 5i extends from the main body portion 3 in the Z direction. Furthermore, the ninth side surface portion 5i extends in the X direction to face the fifth side surface portion 5e in the Y direction (to protrude outward further than the seventh side surface portion 5g). The eighth side surface portion 5h and the ninth side surface portion 5i are disposed at the same height positions in the Y direction.

The tenth side surface portion 5j and the eleventh side surface portion 5k cover a side surface of the positive electrode current collector tab 126b of the positive electrode 126. The tenth side surface portion 5j and the eleventh side surface portion 5k are disposed to face each other in the X direction. The tenth side surface portion 5j is connected to the eighth side surface portion 5h. The tenth side surface portion 5j extends from the main body portion 3 in the Z direction. Further, the tenth side surface portion 5j extends in the Y direction. The eleventh side surface portion 5k is connected to the ninth side surface portion 5i. The eleventh side surface portion 5k extends from the main body portion 3 in the Z direction. In addition, the eleventh side surface portion 5k extends in the Y direction. Lower end portions of the tenth side surface portion 5j and the eleventh side surface portion 5k are located above the overlapping portion 3a of the main body portion 3. That is, the overlapping portion 3a of the main body portion 3 projects (protrudes) in the Y direction further than the tenth side surface portion 5j and the eleventh side surface portion 5k. In addition, a lower end portion of each of the tenth side surface portion 5j and the eleventh side surface portion 5k is curved with a predetermined radius of curvature.

The side surface portion 5 has a predetermined length in the Z direction. Specifically, the side surface portion 5 has at least a length so that it faces the side surfaces 127b and 127c (refer to FIG 6) of the positive electrode current collector tab 126b located closest to the end portion of the positive electrode connecting member 134a. The length of the side surface portion 5 in the Z direction is preferably set so that the side surface portion 5 does not come into contact with the terminal connecting member 134b of the positive electrode strap 134. Further, from the viewpoint of the detachability of the short-circuit prevention member 1, as described above, the side surface portion 5 preferably has at least the length so that it faces the side surfaces 127b and 127c (refer to FIG 6) of the positive electrode current collector tab 126b located closest to the end portion of the positive electrode connecting member 134a. The length of the side surface portion 5 in the Z direction may be appropriately set according to a design.

As shown in FIGS. 3 and 4, when the short-circuit prevention member 1 is mounted on the positive electrode connecting member 134a, the main body portion 3 covers the end surface of the end portion of the positive electrode connecting member 134a in the extending direction and one main surface of the positive electrode current collector tab 126b of the positive electrode 126. Further, the side surface portion 5 covers the side surfaces 135b to 135e (refer to FIG 6) on the end portion side of the positive electrode connecting member 134a in the extending direction and the side surfaces 127b and 127c (refer to FIG 6) of the positive electrode current collector tab 126b of the positive electrode 126. The short-circuit prevention member 1 does not cover the other front surface of the positive electrode current collector tab 126b of the positive electrode 126. Therefore, in the embodiment, in the state in which the short-circuit prevention member 1 is mounted on the positive electrode connecting member 134a, covering at least the end portion of the positive electrode connecting member 134a in the extending direction and the positive electrode current collector tab 126b located closest to the end portion does not mean covering the entire surface of the positive electrode current collector tab 126b but means covering one main surface 127a and the side surfaces 127b and 127c of the positive electrode current collector tab 126b located below in a use mode of the power storage battery 120.

The first claw portion 7a and the second claw portion 7b of the short-circuit prevention member 1 are locked to the other main surface of the positive electrode current collector tab 126b. Therefore, it is possible to prevent the short-circuit prevention member 1 from coming off from the positive electrode connecting member 134a and the positive electrode current collector tab 126b.

The overlapping portion 3a of the main body portion 3 of the short-circuit prevention member 1 faces the separator 130 and is in contact with one main surface of the separator 130. A lower end portion of the overlapping portion 3a is not in contact with the negative electrode 128. Lower end portions of the tenth side surface portion 5j and the eleventh side surface portion 5k of the short-circuit prevention member 1 are in contact with an upper end portion of the peripheral edge portion 130a of the separator 130. The lower end portions of the tenth side surface portion 5j and the eleventh side surface portion 5k are curved. Therefore, the contact between the tenth side surface portion 5j and the eleventh side surface portion 5k and the peripheral edge portion 130a of the separator 130 can prevent a defect such as damage to the separator 130.

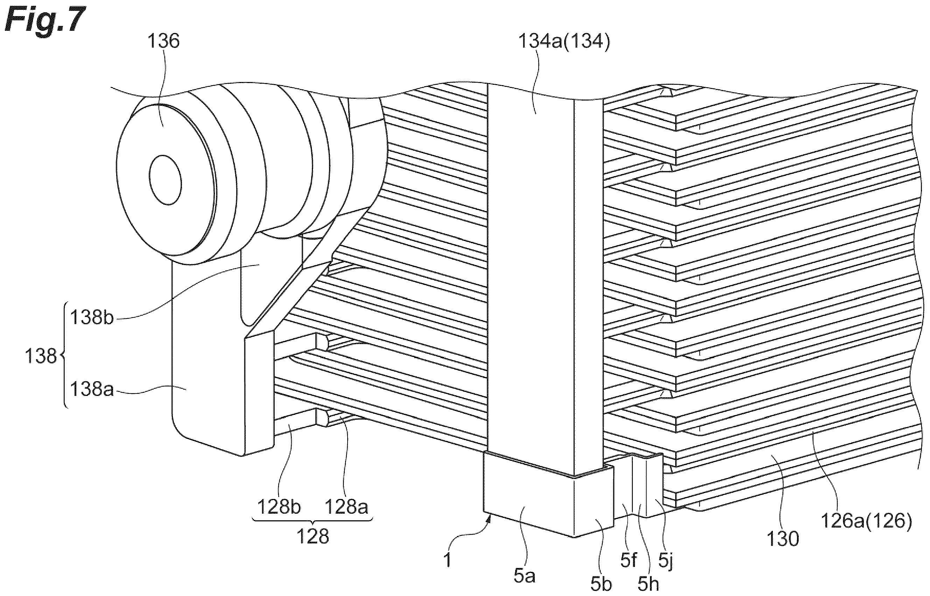

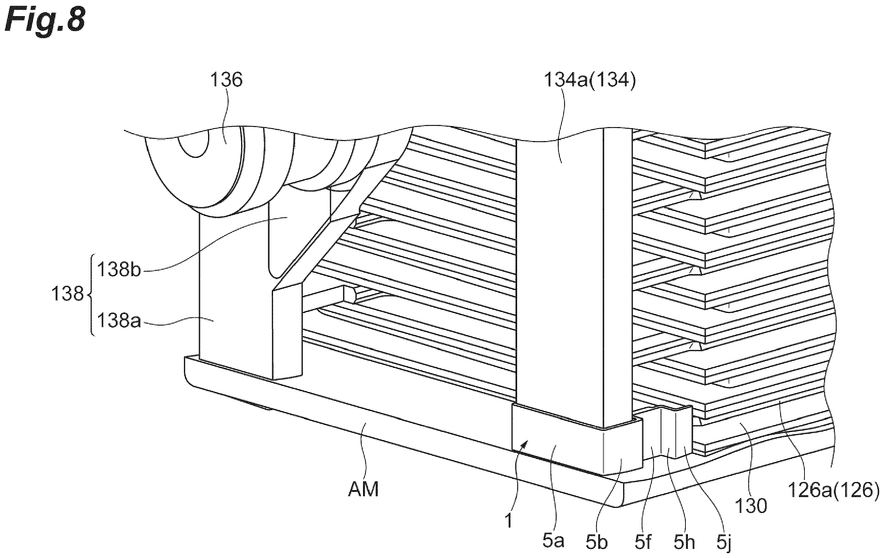

As described above, the short-circuit prevention member 1 according to the embodiment covers at least the end portion of the positive electrode connecting member 134a in the extending direction and the positive electrode current collector tab 126b of the positive electrode 126 located closest to the end portion in the state in which it is mounted on the positive electrode connecting member 134a of the positive electrode strap 134. Thus, as shown in FIG 7, in the case where the power storage battery 120 is disposed and used so that the extending direction of the positive electrode connecting member 134a of the positive electrode strap 134 and the negative electrode connecting member 138a of the negative electrode strap 138 is the vertical direction, even when an active material AM hass accumulated on the lower portion (the side surface portion 140a) of the case 124 as shown in FIG. 8, since the end portion of the positive electrode connecting member 134a and the positive electrode current collector tab 126b are covered with the short-circuit prevention member 1 having electrical insulation, it is possible to prevent the negative electrode 128 disposed at the lowest portion of the case 124 and the positive electrode current collector tab 126b of the positive electrode 126 adjacent to the negative electrode 128 with the separator 130 therebetween from being electrically connected by the active material AM Therefore, the short-circuit prevention member 1 can prevent a short circuit between the positive electrode 126 and the negative electrode 128.

The short-circuit prevention member 1 according to the embodiment includes the main body portion 3 which faces the end surface 135a of the end portion of the positive electrode connecting member 134a and the one main surface 127a of the positive electrode current collector tab 126b, and the side surface portion 5 which faces the side surfaces 135b to 135e adjacent to at least the end surface 135a of the end portion of the positive electrode connecting member 134a and the side surfaces 127b and 127c of the positive electrode current collector tab 126b in the extending direction of the positive electrode connecting member 134a. With such a configuration, it is possible to prevent the end portion of the positive electrode connecting member 134a and the active material accumulated on the positive electrode current collector tab 126b from coming into contact with each other.

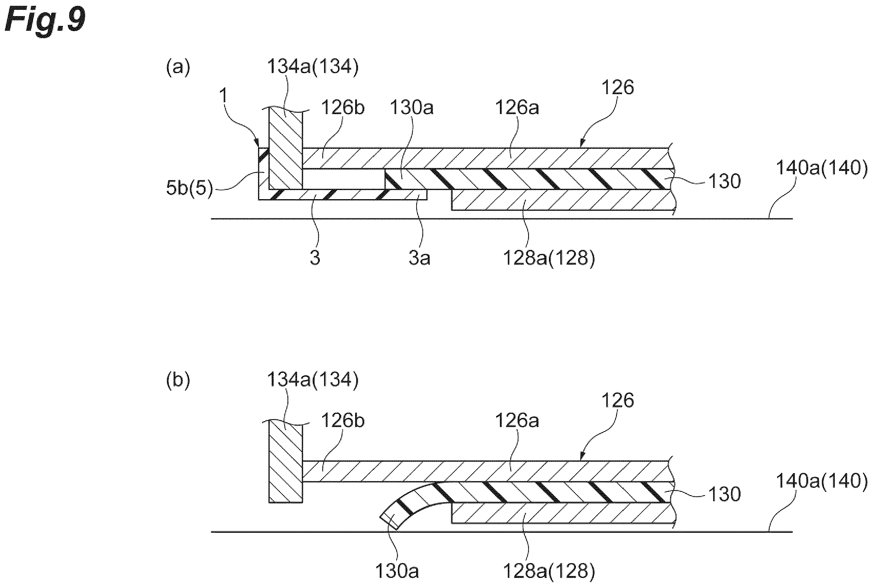

In short-circuit prevention member 1 according to the embodiment, the main body portion 3 includes the overlapping portion 3a which overlaps the peripheral edge portion 130a of the separator 130 on the end portion side of the positive electrode connecting member 134a and is in contact with the peripheral edge portion 130a when seen in the extending direction of the positive electrode connecting member 134a. With such a configuration, as shown in FIG. 9(a), since a part of the peripheral edge portion 130a of the separator 130 can be covered, it is possible to suppress the active material from entering the positive electrode 126 from the peripheral edge portion 130a of the separator 130. Thus, the short-circuit prevention member 1 can further prevent the short circuit between the positive electrode 126 and the negative electrode 128.

Further, since the overlapping portion 3a of the main body portion 3 is in contact with the peripheral edge portion 130a of the separator 130, the peripheral edge portion 130a of the separator 130 is prevented from bending downward as shown in FIG. 9(b). Therefore, it is possible to further prevent the positive electrode 126 and the negative electrode 128 from being short-circuited by the active material.

In the power storage battery 120 according to the embodiment, the negative electrode 128 is disposed at an end portion of the electrode group 122 in the arrangement direction. The short-circuit prevention member 1 is mounted to cover the end portion of the positive electrode connecting member 134a and the positive electrode current collector tab 126b. With such a configuration, it is possible to prevent the negative electrode 128 and the positive electrode current collector tab 126b from being short-circuited by the accumulated active material.

In the power storage battery 120 according to the embodiment, the side surface portion 140a of the main body 140 of the case 124 is translucent. The short-circuit prevention member 1 is colored to be visible from the outside of the side surface portion 140a. With such a configuration, it is possible to check whether or not the short-circuit prevention member 1 is mounted from the outside of the case 124 without performing work of opening the lid 142 of the case 124. Thus, whether or not the short-circuit prevention member 1 is mounted can be easily checked. Therefore, workability of the check can be improved.

The short-circuit prevention member 1 according to the embodiment is not mounted on the negative electrode connecting member 138a of the negative electrode strap 138 in the power storage battery 120. In the embodiment, the negative electrode 128 is disposed at the end portion of the electrode group 122 in the arrangement direction. Therefore, in the electrode group 122, the negative electrode 128 is disposed to face the side surface portion 140a of the case 124. Almost no gap is formed between the side surface portion 140a and the negative electrode 128. In such a configuration, when the short-circuit prevention member 1 is mounted on the negative electrode connecting member 138a of the negative electrode strap 138, the short-circuit prevention member 1 may come into contact with the side surface portion 140a of the case 124 when the electrode group 122 is accommodated in the case 124. Therefore, workability of work of accommodating the electrode group 122 in the case 124 may be reduced.

When the power storage battery 120 is uniformly charged, the active material may float in an electrolytic solution. When the short-circuit prevention member 1 is mounted on the negative electrode connecting member 138a of the negative electrode strap 138, the floating active material may remain in the short-circuit prevention member 1. In this case, there is a possibility that the active material accumulated on the short-circuit prevention member 1 may short-circuit the positive electrode 126 and the negative electrode 128. Therefore, in the configuration in which the negative electrode 128 is disposed at the end portion of the electrode group 122 as in the embodiment, the short-circuit prevention member 1 is not preferably mounted on the negative electrode connecting member 138a.

Although the embodiment of the present invention has been described above, the present invention is not necessarily limited to the above-described embodiment, and various modifications can be made without departing from the scope of the invention.

In the above-described embodiment, the form in which the short-circuit prevention member 1 has the configuration as shown in FIG. 5 has been described as an example. However, the short-circuit prevention member may have any configuration, as long as the short-circuit prevention member covers at least the end portion of the positive electrode connecting member 134a in the extending direction and the positive electrode current collector tab 126b located closest to the end portion in the state in which it is mounted on the positive electrode connecting member 134a.

In the above-described embodiment, the form in which the short-circuit prevention member 1 is colored with red has been described as an example. However, the short-circuit prevention member 1 may be colored with another color. The short-circuit prevention member 1 may be colored to be visible from the outside of the case 124 of the power storage battery 120. Further, the short-circuit prevention member 1 may be colorless (transparent, translucent, or the like).

In the above-described embodiment, the form in which the short-circuit prevention member 1 is not mounted on the negative electrode connecting member 138a of the negative electrode strap 138 has been described as an example. However, the short-circuit prevention member 1 may be mounted on the negative electrode connecting member 138a of the negative electrode strap 138.

In the above-described embodiment, the form in which one positive electrode terminal 132 and one negative electrode terminal 136 are provided has been described as an example. However, a plurality of positive electrode terminals and a plurality of negative electrode terminals may be provided.

### Reference Signs List

- 1: Short-circuit prevention member
- 3: Main body portion (first member)
- 3a: Overlapping portion
- 5: Side surface portion (second member)
- 100: Power storage system
- 102: Solar cell (power generation device)
- 104: Wind power generation device (power generation device)
- 106: Power storage device
- 108: Commercial power supply (supply part)
- 120: Power storage battery
- 122: Electrode group
- 124: Case
- 126: Positive electrode
- 126b: Positive electrode current collector tab
- 127a: Main surface
- 127b, 127c: Side surface
- 128: Negative electrode
- 128b: Negative electrode current collector tab
- 130: Separator
- 130a: Peripheral edge portion
- 132: Positive electrode terminal
- 134a: Positive electrode connecting member
- 135a: End surface
- 135b, 135c 135d, 135e: Side surface
- 136: Negative electrode terminal
- 138a: Negative electrode connecting member

## Claims

1. A short-circuit prevention member used in a power storage battery including an electrode group having a plurality of positive electrodes, a plurality of negative electrodes and a plurality of separators, a positive electrode connecting member having a case configured to accommodate the electrode group, electrically connected to tabs of the plurality of positive electrodes, electrically connected to a positive electrode terminal, and configured to extend in an arrangement direction of the plurality of positive electrodes, and a negative electrode connecting member electrically connected to tabs of the plurality of negative electrodes, electrically connected to a negative electrode terminal, and configured to extend in an arrangement direction of the plurality of negative electrodes,
wherein the short-circuit prevention member has electrical insulation and is attachable to and detachable from at least one of the positive electrode connecting member and the negative electrode connecting member, and
in a state in which the short-circuit prevention member is mounted on the positive electrode connecting member and/or the negative electrode connecting member, the short-circuit prevention member covers at least one end portion of the positive electrode connecting member and/or the negative electrode connecting member in an extending direction and the tab of the positive electrode and/or the tab of the negative electrode located closest to the end portion.

2. The short-circuit prevention member according to claim 1, comprising a first member configured to face an end surface of the end portion and one main surface of the tab, and a second member configured to face a side surface of the end portion adjacent to at least the end surface and a side surface of the tab in the extending direction of the positive electrode connecting member and/or the negative electrode connecting member.

3. The short-circuit prevention member according to claim 2, wherein the first member includes an overlapping portion which overlaps a peripheral edge portion of the separator on the end portion side and is in contact with the peripheral edge portion when seen in the extending direction of the positive electrode connecting member and/or the negative electrode connecting member.

4. The short-circuit prevention member according to any one of claims 1 to 3, wherein the negative electrode is disposed at an end portion of the electrode group of the power storage battery in the arrangement direction, and
the short-circuit prevention member is mounted to cover the end portion of the positive electrode connecting member and the tab of the positive electrode.

5. The short-circuit prevention member according to any one of claims 1 to 4, wherein the case of the power storage battery is translucent, and
the short-circuit prevention member is colored to be visible from an outside of the case.

6. A power storage battery in which the short-circuit prevention member according to any one of claims 1 to 5 is mounted.

7. A power storage device comprising:
the power storage battery according to claim 6; and
a housing configured to accommodate a plurality of power storage batteries,
wherein each of the plurality of power storage batteries is disposed in the housing so that the extending direction of the positive electrode connecting portion and the negative electrode connecting portion is a vertical direction.

8. A power storage system comprising:
the power storage device according to claim 7;
a power generation device using renewable energy; and
a supply part configured to supply electric power generated by the power generation device.
